# EUROPEAN PATENT APPLICATION

(11) **EP 2 036 795 A1**
(43) Date of publication of application: **18.03.2009**
(21) Application number: 08163858.7
(22) Date of filing: 08.09.2008
(51) Int. Cl.: B60W 30/08, B60R 21/01, B60T 7/22

(54) **Vehicle anti-rollover system and method**

(30) Priority: 13.09.2007 US 900824
(71) Applicant: Delphi Technologies, Inc., Troy, Michigan 48007 (US)
(72) Inventor: Lim, Chee Siong, 730520, Singapore (SG); Patterson, James F., Greentown, IN 46936 (US); Chen, Hsien Heng, Troy, MI 48098 (US)
(74) Representative: Denton, Michael John

(57) **Abstract**

An anti-rollover system including a processor, a side impact sensor in communication with the processor, and a controllable suspension-based system and/or a controllable brake-based system in communication with the processor, wherein the controllable suspension-based system and/or the controllable brake-based system is actuated when the side impact sensor detects a side impact.

## Description

### TECHNICAL FIELD

The present application is directed to vehicle safety systems and, more particularly, to systems and methods for avoiding vehicle rollover during a crash event.

### BACKGROUND OF THE INVENTION

The popularity of vehicles having a relatively high center of gravity, such as sport utility vehicles and pickup trucks, has grown over recent years. As such, high center of gravity vehicles now occupy a substantial portion of the vehicle market.

As the number of high center of gravity vehicles on the road continues to increase, the risk of vehicle rollover prompted by a side impact collision also increases. The side impact rollover is particularly severe when the side impact collision is between mismatched vehicles (e.g., a pickup truck and a compact passenger car).

Accordingly, there is a need for a system and method for reducing the risk of vehicle rollover in the event of a side impact collision.

### SUMMARY OF THE INVENTION

In one aspect, the disclosed vehicle anti-rollover system may include a processor, a side impact sensor in communication with the processor, and a controllable suspension-based system and/or a controllable brake-based system in communication with the processor, wherein the controllable suspension-based system and/or the controllable brake-based system is actuated when the side impact sensor detects a side impact.

In another aspect, the disclosed vehicle anti-rollover system may include an airbag deployment system, a side impact sensor in communication with the airbag deployment system, a processor in communication with the airbag deployment system, and a controllable suspension-based system and/or a controllable brake-based system in communication with the processor, wherein at least one of the controllable suspension-based system and/or the controllable brake-based system is actuateable in response to a signal received by the processor from the airbag deployment system.

In another aspect, the disclosed method for avoiding rollover of a vehicle may include the steps of providing the vehicle with a controllable suspension-based system and/or a controllable brake-based system, determining that the vehicle has experienced a side impact and, after the determining step, actuating the controllable suspension-based system and/or the controllable brake-based system in response to the side impact.

Other aspects of the disclosed vehicle anti-rollover system and method will become apparent from the following description, the accompanying drawings and the appended claims.

### BRIEF DESCRIPTION OF THE DRAWINGS

Fig. 1 is a block diagram of a vehicle incorporating an anti-rollover system according to one aspect of the disclosed vehicle anti-rollover system and method; and

Fig. 2 is a flow chart of a method of operation of the anti-rollover system of Fig. 1.

### DESCRIPTION OF THE PREFERRED EMBODIMENTS

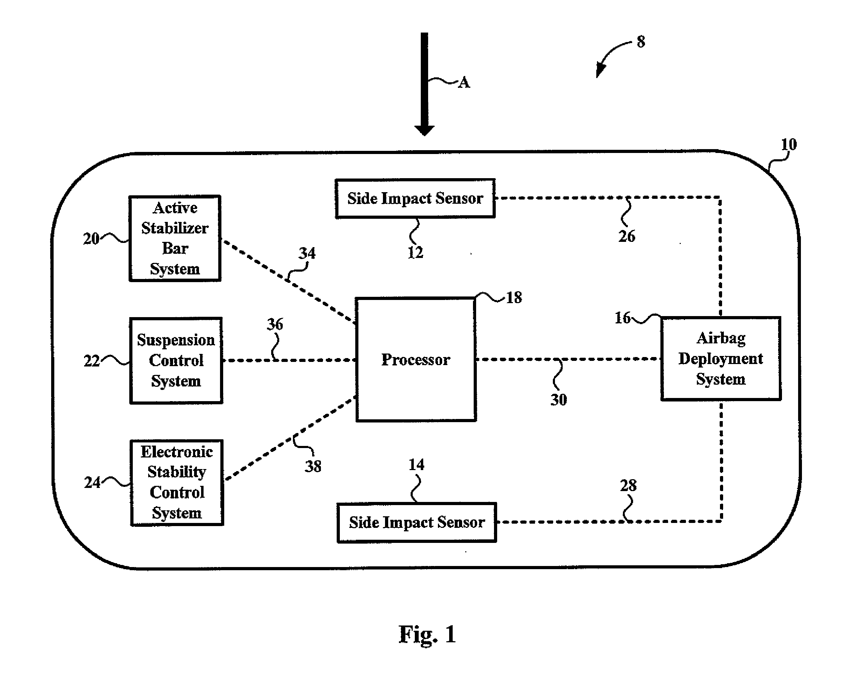

Referring to Fig. 1, one aspect of the disclosed vehicle anti-rollover system, generally designated 8, may include a vehicle 10, side impact sensors 12, 14, an airbag deployment system 16, a processor 18, an active stabilizer bar system 20, an active or semi-active suspension control system 22 and an electronic stability control system 24. The system 8 may resist or counter the tendency of the vehicle 10 to rollover in response to a side impact event (arrow A). The side impact event referred to herein may be caused by a vehicle collision or other force-exerting event in the generally lateral direction relative to the forward traveling direction of the vehicle 10.

The vehicle 10 may be any vehicle, apparatus or device capable of experiencing rollover in response to a side impact event. Examples of appropriate vehicles 10 may include passenger cars, sport utility vehicles (SUVs), multipurpose vehicles (MPVs), crossovers and trucks.

The side impact sensors 12, 14 may be any sensors or like devices that are capable of detecting a side impact event and/or generating a signal indicative of a side impact event. The side impact sensors 12, 14 may be mechanical devices, electrical devices and/or electro-mechanical devices. Examples of appropriate side impact sensors 12, 14 include crush-sensing switches, accelerometers, pressure sensors and the like.

Depending upon the mode of operation of the side impact sensors 12, 14, the side impact sensors 12, 14 may be positioned at various locations around the vehicle 10. For example, side impact sensor 12, 14 including a crush-sensing switch may be positioned in or near the side doors of the vehicle 10.

As shown in Fig. 1, signals indicative of a side impact event may be communicated from the side impact sensors 12, 14 to the airbag deployment system 16 by way of communication lines 26, 28, respectively, and then from the airbag deployment system 16 to the processor 18 by way of communication line 30 (e.g., a serial link). Alternatively (not shown), signals indicative of a side impact event may be directly communicated to the processor 18 from the side impact sensors 12, 14.

In a first exemplary aspect, the side impact sensors 12, 14 may be associated with the vehicle's airbag deployment system 16, wherein the side impact sensors 12, 14 communicate the occurrence of a side impact event to the airbag deployment system 16 such that the airbag deployment system 16 deploys airbags accordingly. Communication between the side impact sensors 12, 14 and the airbag deployment system 16 may be direct (e.g., communication lines 26, 28), as shown in Fig. 1, or indirect, wherein the processor 18 or other system component acts as an intermediary between the side impact sensors 12, 14 and the airbag deployment system 16. The airbag deployment system 16 may then communicate the occurrence of side impact event to the processor 18. Communication between the airbag deployment system 16 and the processor 18 may be over communication line 30, which may be a direct connection, a serial link or the like. Therefore, those skilled in the art will appreciate that a vehicle equipped with a side impact-triggered airbag deployment system 16 may not require additional side impact sensors to implement the disclosed anti-rollover system 8.

In a second exemplary aspect, the side impact sensors 12, 14 may be independent of, or in addition to, the vehicle's airbag deployment system 16. For example, the side impact sensors 12, 14 may be (or may include) a combination of side airbag sensors, front airbag sensors and/or X-axis, Y-axis and Z-axis accelerometers.

The processor 18 may be a computer, an electronic control unit or the like and may actuate, control or otherwise facilitate the operation of the active stabilizer bar system 20, the suspension control system 22 and/or the electronic stability control system 24. The processor 18 may communicate with the active stabilizer bar system 20, the suspension control system 22 and the electronic stability control system 24 by way of communication lines 34, 36, 38, respectively.

In one aspect, a single processor 18 may control the active stabilizer bar system 20, the suspension control system 22 and/or the electronic stability control system 24 based upon signals received from the airbag deployment system 16 and/or the side impact sensors 12, 14 directly. In another aspect, the active stabilizer bar system 20, the suspension control system 22 and/or the electronic stability control system 24 may each have their own respective control units (not shown) that receive and respond to signals from the airbag deployment system 16 and/or the side impact sensors 12, 14 directly. The individual control units may collectively comprise the processor 18.

As used herein, "communicate," "communication line" and "communication lines" is intended to broadly refer to all means of communication between the components of the system 8, including hard wired communication lines, wireless communication lines, communication buses, a serial link and the like. Unless otherwise specified, the communication lines and related communications may be one-way, two-way or both.

The active stabilizer bar system 20 is a controllable suspension-based system and may include a stabilizer bar (not shown) and actuators (not shown), wherein the actuators may manipulate the position of the stabilizer bar in response to a control signal received from the processor 18. In particular, the active stabilizer bar system 20 may include a front axle component (not shown) and a rear axle component (not shown), wherein, in response to a side impact, the processor 18 may, for example, actuate the front axle component of the active stabilizer bar system 20, but not the rear axle component of the active stabilizer bar system 20, thereby enhancing the understeer capability of the vehicle 10 to prevent rollover.

An example of an appropriate active stabilizer bar system 20 is the Delphi Active Stabilizer Bar System available from Delphi Corporation of Troy, Michigan. However, those skilled in the art will appreciate that various active stabilizer bar systems may be used without departing from the scope of the present disclosure.

The suspension control system 22 is a controllable suspension-based system and may include one or more active or semi-active dampers (not shown) that may be controlled by the processor 18. The dampers may be shock absorbers, struts or the like. In one aspect, the dampers may be electro-mechanical valve dampers. In another aspect, the dampers may be magneto-rheological fluid dampers, such as MagneRide^{™} dampers available from Delphi Corporation of Troy, Michigan. However, those skilled in the art will appreciate that various suspension control systems may be used without departing from the scope of the present disclosure.

For example, the suspension control system 22 may include at least one damper positioned at the front axle of the vehicle 10 and at least one damper positioned at the rear axle of the vehicle 10. When a side impact event is detected by the side impact sensors 12, 14, the processor 18 may instruct the damper(s) at the front axle to stiffen and the dampers(s) at the rear axis to soften, thereby reducing transient lateral force at the front axle and enhancing rollover correction.

The electronic stability control system 24 is a controllable brake-based system and may include an individual brake actuating function (not shown) and, optionally, an engine power control function (not shown). In particular, in response to signals received from the processor 18, the electronic stability control system 24 may selectively control the individual braking units at each wheel of the vehicle 10 and, optionally, may reduce engine power. Those skilled in the art will appreciate that various electronic stability control systems are known and available and may be used without departing from the scope of the present disclosure.

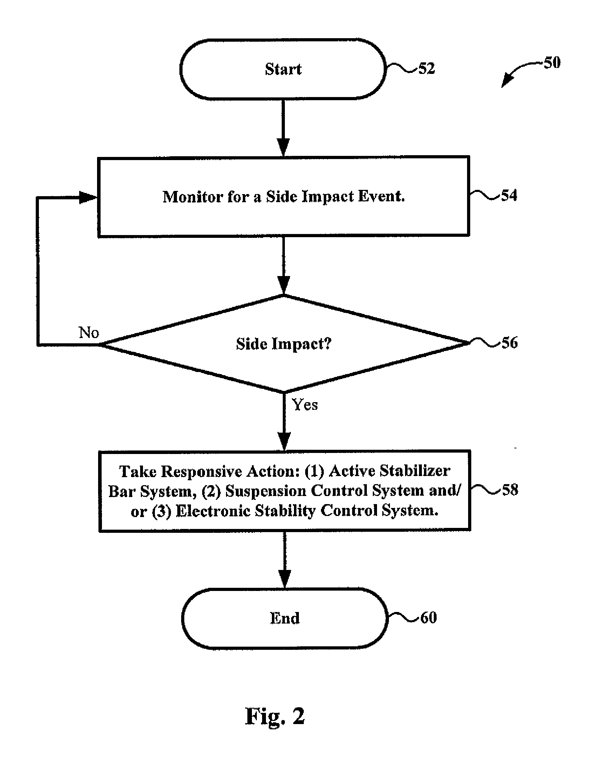

Accordingly, as shown in Fig. 2, the vehicle anti-rollover system 8 may facilitate a method, generally designated 50, for avoiding vehicle rollover. In particular, the method 50 may begin at block 52 and, at blocks 54 and 56, the system 8 may continuously monitor the airbag deployment system 16 and/or the side impact sensors 12, 14 to identify a side impact event. Once a side impact event is detected, the system 8 may actuate one or more of the active stabilizer bar system 20, the suspension control system 22 and the electronic stability control system 24 such that responsive action may be taken, as shown in block 58. The method 50 may end after responsive action has been taken, as shown in block 60.

At this point, those skilled in the art will appreciate that the disclosed vehicle anti-rollover system 8 may be implemented with little or no additional hardware cost when the system 8 is applied to a vehicle that already includes a side impact-triggered airbag deployment system and one or more an active stabilizer bar system, a suspension control system and an electronic stability control system.

Accordingly, the disclosed vehicle anti-rollover system and method combines existing technologies to provide a more stable vehicle during a side impact event. While reference is made to existing technologies, newly developed and future technologies may also be incorporated into the disclosed system and method without departing from the scope of the present disclosure.

Although various aspects of the disclosed vehicle anti-rollover system and method have been shown and described, modifications may occur to those skilled in the art upon reading the specification. The present application includes such modifications and is limited only by the scope of the claims.

## Claims

1. An anti-rollover system comprising:
a processor;
a side impact sensor in communication with said processor; and
at least one of a controllable suspension-based system and a controllable brake-based system in communication with said processor, wherein at least one of said controllable suspension-based system and said controllable brake-based system is actuated when said side impact sensor detects a side impact.

2. The anti-rollover system of claim 1 wherein said communication between said side impact sensor and said processor is direct.

3. The anti-rollover system of claim 1 further comprising an airbag deployment system and said communication between said side impact sensor and said processor is made by way of said airbag deployment system.

4. The anti-rollover system of claim 1 wherein said processor is an electronic control unit;

5. The anti-rollover system of claim 1 wherein said side impact sensor includes at least one of a crush-sensing switch, an accelerometer and a pressure sensor.

6. The anti-rollover system of claim 1 wherein said controllable suspension-based system is at least one of an active stabilizer bar system and a suspension control system.

7. The anti-rollover system of claim 1 wherein said controllable brake-based system is an electronic stability control system.

8. The anti-rollover system of claim 1 wherein said processor, said side impact sensor, said controllable suspension-based system and said controllable brake-based system are disposed on a vehicle.

9. An anti-rollover system comprising:
an airbag deployment system;
a side impact sensor in communication with said airbag deployment system;
a processor in communication with said airbag deployment system; and
at least one of a controllable suspension-based system and a controllable brake-based system in communication with said processor,
wherein at least one of said controllable suspension-based system and said controllable brake-based system is actuateable in response to a signal received by said processor from said airbag deployment system.

10. The anti-rollover system of claim 9 wherein said processor is an electronic control unit;

11. The anti-rollover system of claim 9 wherein said side impact sensor includes at least one of a crush-sensing switch, an accelerometer and a pressure sensor.

12. The anti-rollover system of claim 9 wherein said controllable suspension-based system is at least one of an active stabilizer bar system and a suspension control system.

13. The anti-rollover system of claim 9 wherein said controllable brake-based system is an electronic stability control system.

14. The anti-rollover system of claim 9 wherein said airbag deployment system, said side impact sensor, said processor, said controllable suspension-based system and said controllable brake-based system are disposed on a vehicle.

15. The anti-rollover system of claim 9 wherein said airbag deployment system is in communication with said processor by way of a serial link.

16. A method for avoiding rollover of a vehicle comprising the steps of:
providing said vehicle with at least one of a controllable suspension-based system and a controllable brake-based system;
determining that said vehicle has experienced a side impact; and
after said determining step, actuating at least one of said controllable suspension-based system and said controllable brake-based system in response to said side impact.

17. The method of claim 16 wherein said determining step is performed by a side impact sensor.

18. The method of claim 17 wherein said side impact sensor is associated with an airbag deployment system.

19. The method of claim 16 wherein said controllable suspension-based system includes an active stabilizer bar system having a front axle component and a rear axle component, and wherein said actuating step includes actuating said front axle component and not actuating said rear axle component.

20. The method of claim 16 wherein said controllable suspension-based system includes a suspension control system having a front axle damper and a rear axle damper, and wherein said actuating step includes stiffening said front axle damper and softening said rear axle damper.
